# EUROPÄISCHE PATENTSCHRIFT

(11) **EP 3 323 571 B1**
(45) Veröffentlichungstag und Bekanntmachung des Hinweises auf die Patenterteilung: **04.03.2020**
(21) Anmeldenummer: 17203018.1
(22) Anmeldetag: 22.11.2017
(51) Int. Cl.: B27G 19/10, B23D 45/10, B27B 5/34

(54) **SÄGEAGGREGAT FÜR EINE KREISSÄGE**
SAW UNIT FOR A CIRCULAR SAW
APPAREIL DE SCIAGE POUR UNE SCIE CIRCULAIRE

(30) Priorität: 22.11.2016 DE 202016106537 U
(43) Veröffentlichungstag der Anmeldung: 23.05.2018
(73) Patentinhaber: Wilhelm Altendorf GmbH & Co. KG, 32429 Minden (DE)
(72) Erfinder: Altendorf, Tom, 32429 Minden (DE)
(74) Vertreter: Eisenführ Speiser

(56) Entgegenhaltungen:
- EP-B1- 2 366 482
- AT-U1- 11 019

## Beschreibung

Die Erfindung betrifft ein Sägeaggregat für eine Kreissäge, umfassend eine an einem Grundgestell befestigbare Vorritzsägeeinheit mit einem in einer Vorritzlagerungseinheit um eine Vorritzerdrehachse drehbar gelagerten Vorritzsägewerkzeug mit einem Ritzsägeblattdurchmesser, einer Vorritzantriebseinheit zum Antreiben des Vorritzsägewerkzeugs in eine Rotationsbewegung um die Vorritzerdrehachse, eine Schwenkeinrichtung zum Verschwenken des Vorritzsägewerkzeugs relativ zum Grundgestell um eine horizontale Schwenkachse, die senkrecht zu der Vorritzerdrehachse liegt, eine Ritzbreitenverstelleinrichtung zum Einstellen der Ritzbreite des Vorritzsägewerkzeugs, einen Ritzbreitenaktuator zum Antreiben der Ritzbreitenverstelleinrichtung. Ein solches Sägeaggregat ist der EP 2 366 482 A1 zu entnehmen.

Ein solches Sägeaggregat für eine Kreissäge wird als eine Baueinheit innerhalb einer Kreissäge montiert. Es kann beispielsweise die Funktion eines Vorritzsägeschnitts ausführen. Neben dem Vorritzsägeschnitt kann das Sägeaggregat auch weiterhin die Funktion des Sägeschnitts selbst durchführen, wenn an dem Sägeaggregat ebenfalls das Hauptsägeblatt montiert ist.

Der Vorritzsägeschnitt, der durch die Vorritzsägeeinheit des Sägeaggregats durchgeführt wird, dient dazu, auf einer Seite eines zu schneidenden Werkstücks, eine Struktur einzufräsen, um hierdurch einen ausbruchfreien Austritt der Sägezähne des Hauptsägeblatts, die auf der gegenüberliegenden Seite des Werkstücks in das Werkstück eintreten, zu ermöglichen. Durch diese Vorritzsägefunktion wird ein auf beiden Seiten des Werkstücks ausrissfreier Sägeschnitt an dem Werkstück ermöglicht. Die Vorritzsägeeinheit bringt hierbei beispielsweise eine Vorritznut in das Werkstück ein, die geringfügig breiter als die Schnittbreite des Hauptsägeblatts ist oder eine dazu identische Breite aufweist und deren Mittelachse in Flucht mit der Mittelachse des Sägeschnitts des Hauptsägeblatts ist. Das Vorritzsägewerkzeug ist zu diesem Zweck fluchtend zu dem Hauptsägeblatt angeordnet.

Zur Anpassung an unterschiedliche Hauptsägeblätter, die sich in ihrer Schnittbreite unterscheiden, ist es bekannt, die Ritzbreite des Vorritzsägewerkzeugs einstellbar bereitzustellen. Diese Einstellbarkeit kann beispielsweise solcherart erfolgen, indem das Vorritzsägewerkzeug durch zwei koaxial angeordnete und parallel beabstandete Vorritzsägeblätter bereitgestellt wird, deren axialer Abstand zueinander einstellbar ist. Bei dieser Ausführungsform werden zwei Nuten in die Oberfläche des Werkstücks durch das Vorritzsägewerkzeug eingefräst und das Hauptsägeblatt tritt zwischen und innerhalb dieser zwei Nuten aus dem Werkstück aus, wodurch ein ausrissfreier Schnitt auf beiden Seiten des Werkstücks erreicht werden kann. In anderen Ausführungsformen wird das Vorritzsägewerkzeug durch ein einziges Vorritzsägeblatt bereitgestellt, das durch mehr oder weniger starke Verformung in eine Wellenform nach Art einer Verschränkung am Außenumfang verformt werden kann und hierdurch auch eine einstellbare Ritzbreite durch entsprechende Einstellung des Verformungsgrads verwirklicht. Andere Ausgestaltungen könnten eine mehr oder weniger starke Taumelbewegung des Vorritzsägewerkzeugs steuern, um die Ritzbreite einzustellen.

Ein Sägeaggregat wird innerhalb einer Kreissäge zum Zwecke der Durchführung von Winkelschnitten an einem Werkstück schwenkbar relativ zum Grundgestell montiert. Diese Schwenkbarkeit mittels der Schwenkeinrichtung ermöglicht es beispielsweise, das Vorritzsägewerkzeug aus einer senkrechten Lage des Vorritzsägewerkzeugs, also einer Ausrichtung mit horizontal liegender Vorritzerdrehachse, in der eine senkrecht zur Plattenoberfläche des Werkstück-Auflagestückes liegende Schnittkante geschnitten würde, in eine verschwenkte Position zu schwenken, in der eine Schnittkante an einem Werkstück gesägt werden kann, die in einem Winkel zur Plattenoberfläche liegt, der kleiner oder größer als 90° ist. So kann beispielsweise, um zwei Platten in einem 90° Winkel auf Gehrung miteinander zu verbinden, eine Schnittkante von 45° an beiden Platten geschnitten werden und diese Schnittkanten miteinander verbunden werden. Es ist aus DE 20 2006 004 596 U1 und EP 0 813 939 A1 bekannt, eine Schwenkbarkeit des Hauptsägeblatts und des Vorritzsägewerkzeugs um 45° oder mehr zu einer Seite aus der Ausrichtung mit horizontaler Schwenkachse zu ermöglichen. Für eine schnellere Arbeitsweise und variablere Schnittführung ist es aus EP 1 839 826 B1 ebenfalls bekannt, das Vorritzsägewerkzeug und das Hauptsägeblatt aus der Lage mit horizontaler Schwenkachse zu beiden Seiten verschwenken zu können, beispielsweise aus dieser horizontale Schwenkachse wahlweise im Uhrzeigersinn oder entgegen dem Uhrzeigersinn um jeweils 45° oder beispielsweise 46° verschwenken zu können.

Diese Schwenkbarkeit macht es erforderlich, dass das Vorritzsägewerkzeug und mit dem Vorritzsägewerkzeug mitverschwenkte Bauelemente des Sägeaggregats so kompakt gebaut sind, dass diese Verschwenkung ermöglicht wird, ohne dass die entsprechenden Bauelemente des Sägeaggregats mit dem Grundgestell, der Platte der Werkstückauflage oder anderen Bauteilen der Kreissäge kollidieren. Zu diesem Zweck ist insbesondere eine im Bereich des Vorritzsägewerkzeugs schlanke Bauweise der Vorritzsägeeinheit notwendig. Bei einer Verschwenkbarkeit in beiden Richtungen aus der senkrechten Lage des Vorritzsägewerkzeugs muss diese schlanke Bauweise zudem beidseitig realisiert sein. Es ist aus EP 1 839 826 B1 und EP 2 366 482 B1 bekannt, zu diesem Zweck Elemente von Verstelleinrichtungen, die beispielsweise für die Ritzbreite des Vorritzsägewerkzeugs, gegebenenfalls aber auch für die Höhen- oder Seitenverstellung des Vorritzsägewerkzeugs erforderlich sind, sehr tief an dem Sägeaggregat anzuordnen, beispielsweise in einem Abstand von der Vorritzerdrehachse, der so groß ist, dass ein Antrieb, der für diese Verstelleinrichtung oder Verstelleinrichtungen vorgesehen ist, von dem Vorritzsägewerkzeug beabstandet ist. Hierdurch kann zwar eine schlanke Bauform verwirklicht werden, jedoch erfordert eine solche Beabstandung entsprechende Kraftübertragungselemente, um die Antriebskraft des Aktuators weiterzuleiten. Zudem wird hierdurch der Massenschwerpunkt des Sägeaggregats nach unten versetzt, was bei bestimmten Ritzbreitenverstellfunktionen zu unerwünschten Schwingungen bzw. zusätzlichem Aufwand zur Schwingungsdämpfung und Führung der Vorritzsägeeinheit führt.

Es ist eine Aufgabe der vorliegenden Erfindung, ein Sägeaggregat mit einer Vorritzsägeeinheit bereitzustellen, welches diese Nachteile überwindet.

Diese Aufgabe wird erfindungsgemäß durch ein Sägeaggregat der eingangs genannten Art gelöst, bei dem die Ritzbreitenverstelleinrichtung eine koaxial zur Vorritzerdrehachse angeordnete Stellwelle aufweist, die mit dem Ritzbreitenaktuator gekoppelt und zum Verstellen der Ritzbreite durch den Ritzbreitenaktuator in eine Drehbewegung antreibbar ist. Eine solcherart angeordnete Stellwelle eignet sich einerseits zur Übertragung der für die Ritzbreitenverstellung notwendigen Stellkraft und ermöglicht andererseits eine kompakte Anordnung des Ritzbreitenaktuators. Die Stellwelle ist hierbei drehbar gegenüber der Vorritzerdrehachse und darüber hinaus drehbar gegenüber einer Welle, welche das Vorritzsägewerkzeug trägt. Eine solche, das Vorritzsägewerkzeug tragende Welle kann zu diesem Zweck insbesondere als Hohlwelle oder Hohlflansch ausgeführt sein, um die Stellwelle im Inneren aufzunehmen. Grundsätzlich kann die Ausführungsform derart ausgestaltet sein, dass die Stellwelle bei Betrieb der Vorritzsägeeinheit stillsteht oder sich gemeinsam mit dem Vorritzsägewerkzeug und in gleicher Rotationsgeschwindigkeit dreht, sodass zwischen Stellwelle und Vorritzsägewerkzeug keine Relativbewegung stattfindet. Zum Verstellen der Ritzbreite kann demgegenüber eine Relativbewegung zwischen Stellwelle und Vorritzsägewerkzeug erfolgen, indem die Rotationsgeschwindigkeit von Vorritzsägewerkzeug und Stellwelle unterschiedlich voneinander sind. Diese Relativbewegung kann entsprechend in eine axiale Verstellkraft umgesetzt werden, um die Ritzbreite zu verstellen. Ist hingegen in einer anderen Ausführungsform vorgesehen, dass die Stellwelle sich mit dem Vorritzsägewerkzeug nicht mitdreht, sondern ruht, so rotiert das Vorritzsägewerkzeug um die Stellwelle. In diesem Fall kann ebenfalls durch Verdrehen der Stellwelle die gewünschte Ritzbreitenverstellung herbeigeführt werden.

Gemäß einer ersten bevorzugten Ausgestaltung ist der Ritzbreitenaktuator bei einer Schwenkstellung mit horizontal verlaufender Vorritzerdrehachse zumindest teilweise in einem Abstand von einer durch die Vorritzerdrehachse laufenden horizontalen Ebene angeordnet, der kleiner als der halbe Ritzsägeblattdurchmesser ist, und der Ritzbreitenaktuator innerhalb eines Bereichs angeordnet ist, der durch eine erste und eine zweite Ebene begrenzt wird, die sich entlang der Schwenkachse schneiden, wobei die erste Ebene sich von der Schwenkachse in einem Winkel von 45° nach unten erstreckt und die zweite Ebene sich von der Schwenkachse einem Winkel von minus 45° nach unten erstreckt.

Mit dem so fortgebildeten erfindungsgemäßen Sägeaggregat wird eine kurze Distanz zwischen dem Ritzbreitenaktuator und der Vorritzerdrehachse bereitgestellt. Hierdurch wird eine präzise Kraftübertragung von dem Ritzbreitenaktuator auf das Vorritzsägewerkzeug möglich und hierdurch kann die Ritzbreite einerseits besonders genau, andererseits mit einer effizienten Kraftübertragung, die beispielsweise geringere Antriebskräfte des Ritzbreitenaktuators möglich macht, verwirklicht werden. Der Ritzbreitenaktuator liegt hierbei in einem Bereich, der einen dreieckigen Querschnitt mit einem Winkel von 90°, ausgehend von der Schwenkachse an der oberen Spitze des Dreiecks einnimmt und sich nach unten erstreckt. Hierdurch wird die Benutzung des erfindungsgemäßen Sägewerkzeugs sowohl bei Kreissägen möglich, die ein Verschwenkung von 45° zur einen Seite, von 45° zur anderen Seite oder einen Schwenkbereich von insgesamt 90° mit einer Verschwenkung von 45° zu beiden Seiten für das Vorritzsägewerkzeug vorsehen, da der Ritzbreitenantriebsaktuator für jede dieser Ausführungsformen außerhalb desjenigen Bereichs angeordnet ist, der ansonsten eine Kollision mit der Tischplatte des Auflagetischs einer solchen Kreissäge bewirken würde. Grundsätzlich ist hierbei zu verstehen, dass je nach Ausführungsform der Tischplatte auch bevorzugt ist, wenn der Ritzbreitenantriebsaktuator einen Abstand von diesen den dreieckigen 90°-Raum begrenzenden Ebenen aufweist, beispielsweise einen Abstand von einigen Zentimetern, oder einen größeren Winkel aufweist, beispielsweise 46° zu beiden Seiten, aufweist, wodurch die Plattenstärke des Werkstückauflagetisches oder ein vorzusehende Überstand des Vorritzsägewerkzeugs über die Auflagefläche des Werkstücks auf dem Werkstückauflagetisch oder ein größerer Verschwenkungswinkel berücksichtigt wird. Die erfindungsgemäße Ausführungsform weist weiterhin den Vorteil auf, dass durch die Anordnung des Ritzbreitenaktuator eine günstige Lage des Schwerpunktes erzielt werden kann, wodurch gegenüber Schwingungen des Sägeaggregats günstige Dämpfungseigenschaften bereitgestellt werden können.

Es ist besonders bevorzugt, wenn die Stellwelle zumindest teilweise in einem Hohlraum einer Vorritzerwelle aufgenommen ist, an der das Vorritzsägewerkzeug befestigt ist. Durch Aufnahme der Stellwelle in einem Hohlraum der Vorritzerwelle, die entsprechend zumindest teilweise oder auch vollständig als Hohlwelle oder Hohlflansch ausgeführt ist, wird eine kompakte Bauweise mit hoher Steifigkeit erreicht. Grundsätzlich kann die Vorritzerwelle einteilig, zweiteilig, oder mehrteilig ausgeführt sein, wobei beide, bzw. alle Teile der Vorritzerwelle als Hohlwelle ausgeführt sein können, oder nur eines bzw. einige der Teile, welche die Vorritzerwelle bilden. Durch eine solche mehrteilige Gestaltung der Vorritzerwelle kann eine Stellkraft aus einer innerhalb der Vorritzerwelle angeordneten Stellwelle nach radial auswärts übertragen werden und die gewünschte Ritzbreitenverstellung bewirken.

Insbesondere kann hierbei vorgesehen sein, dass die Stellwelle mittels eines Gewindes so mit einer Stellachse gekoppelt ist, dass die Drehbewegung der Stellwelle in eine translatorische Bewegung der Stellachse umgesetzt wird. Diese Kopplung bewirkt eine Umsetzung der Drehbewegung in eine translatorische Bewegung, die für eine Verstellung der Ritzbreite nutzbar ist. Beispielsweise kann die Stellachse mit einem von zwei Ritzsägeblättern gekoppelt sein, das hierdurch translatorisch zu dem anderen Ritzsägeblatt verschoben wird.

Dabei ist es noch weiter bevorzugt, wenn die Stellwelle mittels eines Zahnradgetriebes mit dem Ritzbreitenaktuator gekoppelt ist. Eine Kopplung mittels eines Zahnradgetriebes oder eines Zugmittelgetriebes ermöglicht einerseits eine schlupffreie Übertragung der Stellkräfte, die für die Ritzbreitenverstellung über die Stellwelle aufgebracht werden. Des Weiteren kann durch ein solches Zahnradgetriebe eine präzise Verstellung erfolgen, indem das Zahnradgetriebe entweder spielfrei ausgeführt wird, oder eine Vorspannung in eine Bewegungsrichtung des Zahnradgetriebes vorgesehen ist. Ein Zahnradgetriebe weist weiterhin den Vorteil auf, dass eine Untersetzung oder Übersetzung der Stellkraft bzw. der Drehbewegung der Stellwelle in dem Getriebe erfolgen kann, was bei Auslegung und Dimensionierung des Ritzbreitenaktuators vorteilhaft für eine kompakte Ausgestaltung ist.

Dabei kann insbesondere vorgesehen sein, dass das Zahnradgetriebe bzw. das Zugmittelgetriebe ein Kegelradgetriebe, ein Stirnradgetriebe, ein Schneckengetriebe, ein Kettengetriebe, ein Riemengetriebe, wie ein Zahnriemengetriebe oder ein Keilriemengetriebe ist. Ein Kegelradgetriebe und Schneckengetriebe ermöglicht eine abgewinkelte Anordnung der Antriebsachse des Ritzbreitenaktuators zu der Stellwelle und eröffnet hierdurch eine einfache Möglichkeit einer Anordnung des Ritzbreitenaktuators innerhalb des 90°-Winkelbereichs, der für eine Verschwenkung der Vorritzsägeeinheit in eine oder beide Richtungen aus der vertikalen Lage notwendig ist. Zugleich kann sowohl mit einem Kegelradgetriebe als auch einem Schneckengetriebe eine Untersetzung der Drehbewegung und folglich Verstärkung des Drehmoments umgesetzt werden, wodurch einerseits die Präzision der Ritzbreitenverstellung erhöht wird und andererseits die Dimensionierung des Ritzbreitenaktuators für einen kompakten Einbau begünstigt wird. Ein Stirnradgetriebe ermöglicht demgegenüber eine vereinfachte Montage, kann ebenfalls eine Untersetzung oder auch Übersetzung der Rotationsbewegung bewirken und ist daher für bestimmte Anwendungsfälle bevorzugt.

Gemäß einer bevorzugten Ausführungsform ist vorgesehen, dass die Kraftübertragung von dem Ritzbreitenaktuator auf das Ritzwerkzeug, also insbesondere die Ritzsägeblätter, eine Getriebeübertragung mittels Stirnzahnrädern umfasst. Insbesondere kann hierbei vorgesehen sein, dass mehrere Stirnzahnräder in die Übertragung eingebunden sind, deren Drehachsen parallel und beabstandet zu einander angeordnet sind. Die Stirnzahnräder können insbesondere vertikal zueinander gestaffelt sein und auf diese Weise eine Kraftübertragung von einem Aktuator, der unterhalb der Rotationsachse des Ritzwerkzeugs, also insbesondere unterhalb der Achse der Ritzsägewelle, angeordnet ist, in der Richtung zur Rotationsachse des Ritzwerkzeugs bewirken. Die Getriebeübertragung kann hierbei insbesondere eine einfache oder mehrfache Getriebeuntersetzung verwirklichen, sodass eine Drehzahlreduktion und eine Drehmomenterhöhung durch das Getriebe erreicht werden. Der Ritzbreitenktuator kann insbesondere ein elektrischer Antrieb sein, beispielsweise ein Elektromotor, der eine Rotationsbewegung zwischen einem Stator und einem Rotor erzeugt. Die Ausgestaltung mit einem Stirnradgetriebe ermöglicht eine schlanke Bauweise, eine direkte Kraftübertragung bei kurzem Kraftübertragungsweg und weist daher besondere Vorteile für die Anordnung von Ritzbreitenaktuator und Ritzbreitenverstellkraftübertragung auf Höhe des Ritzsägeaggregats auf. Die Ausgestaltung ist daher besonders vorteilhaft gegenüber einer Anordnung des Ritzbreitenantriebs unterhalb des Ritzsägeaggregats mit einem entsprechend langem Übertragungsweg, der die Präzision der Ritzbreitenverstellung nachteilig beeinflusst und durch die hervorgerufenen hohen Kräfte verschleißempfindlich und wartungsintensiv ist.

Gemäß einer weiteren bevorzugten Ausführungsform ist vorgesehen, dass das Zahnradgetriebe selbsthemmend ist. Durch eine selbsthemmende Wirkung des Zahnradgetriebes wird erreicht, dass eine unerwünschte Verstellung durch Krafteinwirkung auf das Vorritzsägewerkzeug verhindert wird, ohne dass hierfür eine separate Feststelleinrichtung oder dergleichen notwendig wird. Unter einer Selbsthemmung ist hierbei zu verstehen, dass ein Verdrehen des Getriebes über die Antriebswelle, also aus dem Ritzbreitenaktuator möglich ist, jedoch nicht umgekehrt über die Abtriebswelle, also durch Krafteinwirkung auf die Stellwelle. Grundsätzlich kann die Selbsthemmung solcher Art erreicht werden, dass ein auf die Stellwelle einwirkendes Drehmoment nicht zu einem Verdrehen des Zahnradgetriebes führt, also eine Selbsthemmung durch das Zahnradgetriebe alleine und den Ritzbreitenaktuator erfolgt. Ist die Stellwelle in der weiteren Kraftübertragung auf das Vorritzsägewerkzeug zusätzlich untersetzt oder mit anderen mechanischen Übertragungselementen versehen, kann die Selbsthemmung auch solcherart bewirkt werden, dass eine Krafteinwirkung auf das Vorritzsägewerkzeug durch diese Kraftübertragung von der Stellwelle und das Zahnradgetriebe solcherart gehemmt wird, dass eine Verstellung der Ritzbreite nicht erfolgen kann.

Gemäß einer weiteren bevorzugten Ausführungsform ist vorgesehen, dass der Ritzbreitenaktuator ein Drehaktuator ist, der eine in einem Antriebsgehäuse drehbar um eine Antriebsaktuatorachse gelagerte Antriebswelle aufweist. Ein Drehaktuator als Ritzbreitenaktuator eignet sich besonders gut, um eine präzise Verstellung mit hoher Stellkraft zu erzeugen. Insbesondere kann der Ritzbreitenaktuator hierbei durch einen elektrischen Motor wie einen Servomotor oder einen Schrittmotor ausgeführt sein, wobei gegebenenfalls eine Untersetzung der Drehbewegung des elektrischen Motors mittels eines Getriebes, wie beispielsweise eines Planetenradgetriebes vorgesehen sein kann. Zu diesem Zweck kann die Antriebswelle entsprechend mit einer Eingangswelle des Getriebes gekoppelt sein und die Ausgangswelle des Getriebes eine Kopplung mit dem Vorritzsägewerkzeug, insbesondere einer Stellwelle zur Verstellung der Ritzbreite aufweisen.

Dabei ist es weiter bevorzugt, wenn die Antriebsaktuatorachse senkrecht zur Vorritzerdrehachse verläuft. Durch eine solche senkrechte Anordnung der Antriebsaktuatorachse zur Vorritzerdrehachse wird eine kompakte Anordnung des Ritzbreitenaktuators ermöglicht, indem dieser abgewinkelt in Bezug auf seine Längsachse und Antriebsachse zur Vorritzerdrehachse angeordnet wird.

Noch weiter ist es dabei bevorzugt, wenn die Antriebsaktuatorachse horizontal oder vertikal verläuft. Eine solche horizontale oder vertikale Anordnung der Antriebsaktuatorachse ermöglicht eine schlanke Bauweise der Vorritzsägeeinheit im Bereich des Ritzbreitenaktuators, beispielsweise indem der Ritzbreitenaktuator sich mit seiner Längserstreckung, ausgehend von der Vorritzerdrehachse, nach unten oder sich senkrecht zur Vorritzerdrehachse und horizontal erstreckt.

Gemäß einer hierzu alternativen Ausführungsform ist vorgesehen, dass die Antriebsaktuatorachse in einem Winkel zur Horizontalen steht, der größer als 0° und kleiner als 90° ist. Eine Ausrichtung der Antriebsaktuatorachse in einem schrägen Winkel dieser Art erlaubt eine konstruktive Anordnung des Ritzbreitenaktuators, die sich in günstiger Form an den notwendigen Freiraum, der für eine Verschwenkung des Vorritzsägewerkzeugs notwendig ist, ausrichten lässt.

Gemäß einer weiteren bevorzugten Ausführungsform ist vorgesehen, dass das Vorritzsägewerkzeug ein erstes Vorritzsägeblatt und ein koaxial zum ersten Vorritzsägeblatt angeordnetes zweites Vorritzsägeblatt, das axial relativ zum ersten Vorritzsägeblatt mittels der Ritzbreiteneinstellvorrichtung beweglich ist, umfasst. Durch die Bereitstellung von zwei axial beabstandeten Vorritzsägeblättern wird eine Vorritzfunktion erzielt, die zwei separate parallele Vorritznuten erzeugen kann, die einen ausrissfreien Austritt der Zähne des Hauptsägeblatts ermöglichen. Die beiden Vorritzsägeblätter können hierbei durch axiale Verstellung zueinander diese beiden Vorritznuten in unterschiedlichem Abstand zueinander parallel in eine Oberfläche des zu schneidenden Werkstücks einfräsen und ermöglichen dadurch eine präzise Ritzbreiteneinstellung. Die Vorritzsägeblätter können insbesondere für eine Rotationsbewegung miteinander gekoppelt sein, um eine synchrone Rotationsbewegung der beiden Vorritzsägeblätter zu erreichen.

Es ist dabei weiter besonders bevorzugt, die Vorritzsägeeinheit fortzubilden durch ein axial von dem Vorritzsägewerkzeug beabstandetes elastisches Element, welches eine elastische Kraft zwischen einem mit dem ersten Vorritzsägeblatt gekoppeltem Vorspannelement und einem zweiten, mit dem zweiten Vorritzsägeblatt gekoppeltem Vorspanngegenelement erzeugt. Ein solches elastisches Element kann einerseits dazu eingesetzt werden, eine elastische Kraft aufzubringen, welche die beiden Vorritzsägeblätter gegen die Verstellkraft des Ritzbreitenaktuators verspannt, beispielsweise auseinanderdrückt oder zusammenpresst. Weiterhin kann ein solches elastisches Element bewirken, dass die Ritzbreitenverstellung spielfrei ausgeführt wird und dadurch eine hohe Präzision hat. Durch die Anordnung des elastischen Elements in axialer Beabstandung zum Vorritzsägewerkzeug wird vermieden, dass das elastische Element zwischen den beiden Vorritzsägeblättern platziert sein muss, was eine Einstellung schmaler Vorritzbreiten erschweren würde. Stattdessen kann das elastische Element seitlich des Vorritzsägewerkzeugs angeordnet werden und die Vorspannkraft über entsprechende Übertragungselemente aufbringen. Als elastisches Element eignet sich hierbei beispielsweise eine Feder, wie beispielsweise eine Schraubenfeder oder Tellerfeder, oder eine Spiralfeder, welche einer Drehbewegung, die zur Ritzbreitenverstellung dient, entgegenwirkt, oder ein gummielastisches Element.

Gemäß einer weiteren oder hierzu alternativen Ausführungsform kann die Vorritzsägeeinheit fortgebildet werden durch radial bewegliche Gewichtselemente, die in einem sich nach radial auswärts verengenden Ringspalt zwischen einer ersten und einer zweiten Ringfläche angeordnet sind, wobei die erste Ringfläche mit dem ersten Vorritzsägeblatt und die zweite Ringfläche mit dem zweiten Vorritzsägeblatt verbunden ist. Gemäß dieser Ausführungsform erfolgt eine Stabilisierung der Position der beiden Vorritzsägeblätter durch Fliehkräfte, die über entsprechende radial bewegliche Gewichtselemente einer auf die Vorritzsägeblätter einwirkende Fliehkraft ausüben, die durch einen sich radial auswärts verengenden Ringspalt eine axiale Kraft bewirken.

Gemäß einer noch weiteren bevorzugten Ausführungsform ist vorgesehen, dass die Schwenkeinrichtung ausgebildet ist, um das Vorritzsägewerkzeug aus einer vertikalen Ausrichtung, in der die Vorritzerdrehachse horizontal verläuft, in eine erste Richtung um die Schwenkachse und aus der vertikalen Ausrichtung in eine der ersten Richtung entgegengesetzten zweite Richtung um die Schwenkachse zu verschwenken. Gemäß dieser Ausführungsform wird ermöglicht, dass das Vorritzsägewerkzeug aus einer Ausrichtung mit horizontal stehender Vorritzerdrehachse sowohl im Uhrzeigersinn als auch entgegen dem Uhrzeigersinn zu einer Seite, zur anderen Seite oder zu beiden Seiten verschwenkt werden kann. Dies ermöglicht einerseits eine Verwendung des Sägeaggregats in verschiedenen Maschinenformen mit entsprechend einseitiger oder auch beidseitiger Verschwenkung und erlaubt hierbei dem Maschinennutzer eine flexible Nutzung und schnelle Arbeitsweise bei der Durchführung von Winkelschnitten an Werkstücken.

Gemäß dieser Ausführungsform wird insbesondere eine Verschwenkung aus der vertikalen Ausrichtung in beide Richtungen ermöglicht. Insbesondere kann hierbei eine Verschwenkung um 45° oder um einen geringfügig oberhalb von 45° liegenden Winkel zu beiden Seiten ermöglicht werden, sodass sich ein gesamter Verschwenkbereich des Vorritzsägewerkzeugs über einen Winkel von 90° oder einen entsprechend geringfügig über 90° liegenden Winkelbereich ergibt. Bei dieser beidseitigen Schwenkbarkeit kommt die besonders kompakte, zugleich aber schwingungsarme und mit geringen Übertragungswegen für die Ritzbreitenverstellung ausgerüstete Bauform des erfindungsgemäßen Sägeaggregats in effizienter Weise zum Einsatz und wirkt mit diesem großen Verstellbereich wirksam zusammen.

Gemäß einer weiteren bevorzugten Ausführungsform kann das erfindungsgemäße Sägeaggregat fortgebildet werden durch ein um eine Hauptsägeblattachse drehbar gelagertes Hauptsägeblatt, welches synchron mit dem Vorritzsägewerkzeug mittels der Schwenkeinrichtung verschwenkbar ist. Grundsätzlich kann ein der Erfindung entsprechendes Sägeaggregat durch eine separate Vorritzsägeeinheit verwirklich sein, die mit einem entsprechenden weiteren Sägeaggregat, welches das Hauptsägeblatt beinhaltet, kombiniert wird. Besonders bevorzugt ist es aber, in dem Sägeaggregat integral das Vorritzsägewerkzeug und das Hauptsägeblatt anzuordnen. Diese Anordnung von Hauptsägeblatt und Vorritzsägewerkzeug in dem Sägeaggregat ermöglicht beispielsweise die synchrone Verschwenkung des Hauptsägeblatts und des Vorritzsägewerkzeugs um die Schwenkachse mittels einer einzigen Schwenkeinrichtung, wodurch diesbezüglich eine gleiche Winkelausrichtung des Vorritzsägewerkzeugs und des Hauptsägeblatts für entsprechende Winkelschnitte sichergestellt werden kann. Die gemeinsame Anordnung an einem Sägeaggregat ermöglicht weiterhin funktionelle Vorteile, beispielsweise, indem eine Verstellung in Bezug auf die Höhe, ein Antrieb oder eine Sicherheits-Schnellabsenkung durch gemeinschaftliche Funktionselemente für das Hauptsägeblatt und das Vorritzsägewerkzeug verwirklicht werden. Grundsätzlich ist zu verstehen, dass es in bevorzugten Ausführungsformen vorteilhaft ist, wenn die Höhenverstellung des Vorritzsägewerkzeugs unabhängig von einer Höhenverstellung des Hauptsägeblatts ausgeführt werden kann. Weiterhin ist es für einen exakte Positionierung des Vorritzsägewerkzeugs in Bezug auf das Hauptsägeblatt vorteilhaft, wenn eine Seitenverstellung des Vorritzsägewerkzeugs relativ zu der axialen Position des Hauptsägeblatts an dem Sägeaggregat verwirklicht ist.

Das eingangs beschriebene Sägeaggregat oder das zuvor beschriebene Sägeaggregat kann gemäß eines weiteren Aspekts fortgebildet werden durch eine Höhenverstelleinrichtung zum Positionieren des Vorritzsägewerkzeugs relativ zu dem Grundgestell in einer vertikalen Richtung quer zu der Vorritzerdrehachse, und einen Höhenantriebsaktuator zum Antreiben der Höhenverstelleinrichtung. Weiterhin kann das eingangs beschriebene Sägeaggregat oder das zuvor beschriebene erfindungsgemäße Sägeaggregat fortgebildet werden durch eine Seitenverstelleinrichtung zum Positionieren des Vorritzsägewerkzeugs relativ zu dem Grundgestell in einer horizontalen Richtung entlang der Vorritzerdrehachse, und einen Seitenantriebsaktuator zum Antreiben der Seitenverstelleinrichtung. Eine solche Höhenverstelleinrichtung oder Seitenverstelleinrichtung kann an dem Sägeaggregat vorgesehen sein, um die Höhe des Vorritzsägewerkzeugs in Bezug auf den Werkstückauflagetisch einstellen zu können, um eine bestimmte Ritztiefe für die Vorritznut(en) einstellen zu können. Die Seitenverstelleinrichtung an dem erfindungsgemäßen Sägeaggregat dient insbesondere dazu, um das Vorritzsägewerkzeug in seitlicher Richtung, insbesondere parallel zur Vorritzerdrehachse verstellen zu können, wobei diese Verstellung relativ zu der Position eines Hauptsägeblatts am Sägeaggregat, bzw. an der Kreissäge erfolgen kann, um eine exakte Fluchtung zwischen den Mittelachsen der Schnitte des Vorritzsägewerkzeugs und des Hauptsägeblatts einzustellen. Sowohl die Höhenverstelleinrichtung als auch die Seitenverstelleinrichtung können motorisch erfolgen, hierzu ist dann ein entsprechender Höhenaktuator, bzw. Seitenaktuator vorgesehen, welcher die entsprechende Verstellung in der Höhe oder in der Seite über eine mechanische Kopplung, Untersetzung, Übersetzung oder Hebelübertragung oder dergleichen bewirkt.

Dabei ist grundsätzlich zu verstehen, dass sowohl die Seitenverstelleinrichtung als auch die Höhenverstelleinrichtung eine relative Verstellung des Vorritzsägewerkzeugs zu der Grundplatte bewirken kann.

Insbesondere ist bei den Ausführungsformen mit Höhenaktuator und/oder Seitenaktuator es bevorzugt, wenn der Höhenaktuator und/oder der Seitenaktuator bei einer Schwenkstellung mit horizontal verlaufender Vorritzerdrehachse zumindest teilweise in einem Abstand von einer durch die Vorritzerdrehachse laufenden horizontalen Ebene angeordnet ist, der kleiner als der halbe Ritzsägeblattdurchmesser ist, und innerhalb eines Bereichs angeordnet ist, der durch eine erste und eine zweite Ebene begrenzt wird, die sich entlang der Schwenkachse schneiden, wobei die erste Ebene sich von der Schwenkachse in einem Winkel von 45° nach unten erstreckt und die zweite Ebene sich von der Schwenkachse in einem Winkel von -45° nach unten erstreckt.. Gemäß dieser Ausführungsform ist der Höhenaktuator oder Seitenaktuator oder beide Aktuatoren in direkter Anordnung zur Vorritzerdrehachse platziert und ermöglicht hierdurch eine Übertragung der zur Höhen- bzw. Seitenverstellung erforderlichen Kraft auf das Vorritzsägewerkzeug ohne lange Kraftübertragungswege, also mit kurzen Hebel- oder Übertragungswegen, wodurch eine präzise Einstellung erreichbar wird. Dabei ist grundsätzlich zu verstehen, dass sowohl der Höhenaktuator als auch der Seitenaktuator bevorzugt innerhalb eines Bereich angeordnet sind, der durch eine erste und eine zweite Ebene begrenzt wird, die sich entlang einer Linie schneiden, die parallel zur Schwenkachse liegt und wobei die erste Ebene sich von dem oberen Rand des Vorritzsägewerkzeugs in einem Winkel von 45° nach unten erstreckt und die zweite Ebene sich von dem oberen Rand des Vorritzsägewerkzeugs in einem Winkel von -45° nach unten erstreckt. Durch diese kompakte und schlanke Platzierung des Höhenaktuators und Seitenaktuators zum Vorritzsägewerkzeug wird eine Verschwenkung des Vorritzsägewerkzeugs aus der vertikalen Ausrichtung in beide Richtungen um 45° ermöglicht, insbesondere kann der Höhenaktuator und/oder Seitenaktuator auch in einem noch kleineren Raum angeordnet sein, der durch Ebenen begrenzt wird, die einen kleineren Winkel als 90° einschließen, oder in einem Raum, der zwar durch zwei Ebenen begrenzt wird, die einen Winkel von 90° einschließen, jedoch einen nach innen versetzten Abstand von einigen Zentimetern, beispielsweise 3 Zentimetern, zu diesen Ebenen einhält.

Ein weiterer Aspekt der Erfindung ist eine Kreissägemaschine mit einem Grundträger, einem an dem Grundgestell befestigten Werkstückauflagetisch und einem Sägeaggregat nach einem der Ansprüche 1 bis 11, wobei das Sägeaggregat entlang eines Sägeschlitzes in dem Werkstückauflagetisch zur Durchführung eines Sägeschnittes längsverfahrbar ist, oder am Grundgestell befestigt ist, und während eines Sägeschnitts ortsfest durch eine Sägeblattöffnung vorsteht.

Eine solche Kreissägemaschine ist demzufolge entweder als Formatkreissäge ausgebildet, bei der das Werkstück auf einem Auflagetisch angeordnet ist und verschoben wird, um den Sägeschnitt an einem feststehenden Sägeblatt auszuführen oder als Plattensäge ausgeführt, bei dem das Werkstück auf einem Auflagetisch fixiert wird und das Sägeblatt an einem verfahrbaren Sägeaggregat montiert ist, das zur Durchführung des Schnitts relativ zum feststehenden Werkstück verfährt. Die so fortgebildete Kreissäge zeichnet sich durch das Sägeaggregat mit einem präzisen Lauf des Vorritzsägewerkzeugs und einer exakten Verstellmöglichkeit der Ritzbreite und gegebenenfalls Höhenlage und Seitenlage des Vorritzsägewerkzeugs aus.

Bevorzugte Ausführungsformen der Erfindung werden anhand der beiliegenden Figuren beschrieben. Es zeigen:
- Fig. 1: eine perspektivische Gesamtansicht einer Kreissäge,
- Fig. 2: eine perspektivische Gesamtansicht eines Sägeaggregats einer solchen Kreissäge,
- Fig. 2a: eine perspektivische Ansicht des Sägeaggregats gemäß Fig. 2 mit Teilansicht von Komponenten der Kreissäge gemäß Fig. 1 in einer ersten Schwenkstellung,
- Fig. 2b: eine perspektivische Ansicht gemäß Fig. 2a in einer zweiten Schwenkstellung,
- Fig. 3: eine Seitenansicht eines Ausschnitts des Sägeaggregats mit einer ersten Ausführungsform einer Ritzbreitenverstelleinrichtung,
- Fig. 4: eine vertikal geschnittene Frontalansicht der Ausführungsform gemäß Fig. 3,
- Fig. 5: eine Seitenansicht eines Ausschnitts des Sägeaggregats mit einer zweiten Ausführungsform einer Ritzbreitenverstelleinrichtung,
- Fig. 6: eine vertikal geschnittene Frontalansicht der Ausführungsform gemäß Fig. 5,
- Fig. 7: eine Seitenansicht eines Ausschnitts des Sägeaggregats mit einer dritten Ausführungsform einer Ritzbreitenverstelleinrichtung,
- Fig. 8: eine vertikal geschnittene Frontalansicht der Ausführungsform gemäß Fig. 7,

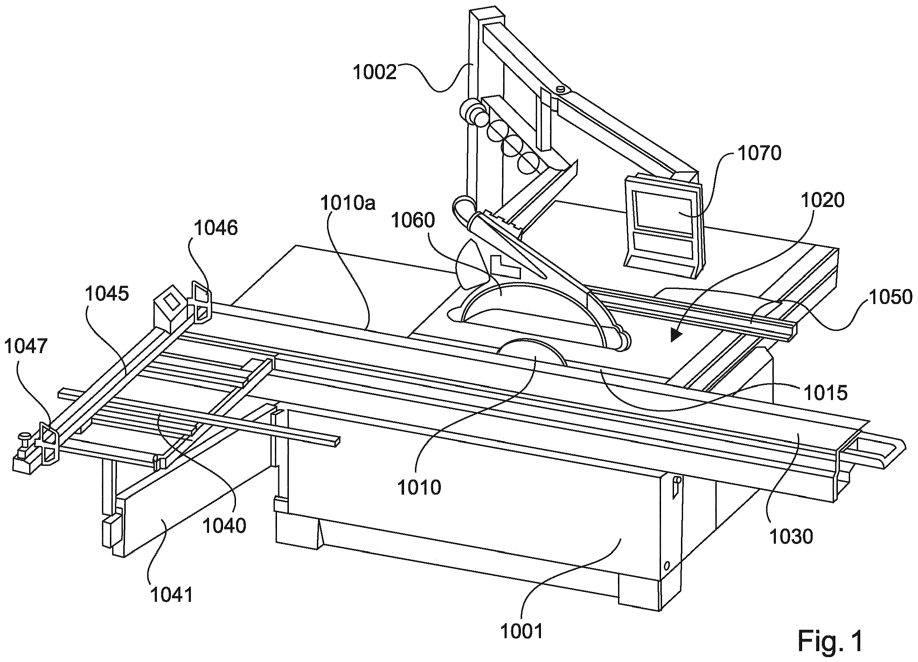

Fig. 1 zeigt eine Sägemaschine in Form einer Formatkreissäge mit einem Maschinengrundgestell 1001, in dem ein Sägeblatt 1010 an einem Sägeaggregat (nicht sichtbar) angeordnet ist. Das Sägeblatt 1010 ragt aus einem Werkstückauflagetisch 1020 nach oben heraus. An dem Maschinengrundgestell 1001 ist ein Rollwagen 1030 angeordnet, der für eine lineare Bewegung in horizontaler Richtung entlang einer Sägelinie 1010a des Hauptsägeblatts linear geführt ist. An dem Rollwagen 1030 ist ein Winkelgehrungsanschlag 1040 befestigt, der sich mit dem Rollwagen bewegt und eine Winkelanschlagsschiene 1045 trägt. An der Winkelanschlagsschiene können Werkstücke, die auf dem Rollwagen und einer Auflagefläche des Winkelgehrungsanschlags 1040 aufliegen, mit einer Kante angelegt werden, um hierdurch eine definierte Winkelausrichtung einzustellen und während des Sägeschnitts beizubehalten. Entlang der Winkelanschlagsschiene 1045 sind zwei Anschlagklappen 1046, 1047 in Längsrichtung der Winkelanschlagsschiene 1045 verfahrbar und daran fixierbar angeordnet. Mittels dieser Anschlagklappen kann eine weitere Kante des Werkstücks in einer definierten Position gehalten werden, um hierdurch ein Schnittmaß einzustellen. Der Winkelgehrungsanschlag 1040 kann in einer horizontalen Ebene nach Art eines Parallelogramms verschwenkt werden, wodurch die Winkelanschlagschiene 1045 in unterschiedlichen Winkellagen zur Sägelinie 1010a ausgerichtet werden kann.

Mittels eines schwenkbar am Maschinengrundgestell 1001 befestigten Teleskoparms 1041 ist die außenliegende Kante des Winkelgehrungsanschlags 1040 in vertikaler Richtung abgestützt, um ein Werkstück tragen zu können.

Am Maschinenauflagetisch 1020 ist weiterhin ein Parallelanschlag 1050 angeordnet, der sich parallel zur Sägelinie 1010a erstreckt und eine alternative Anlagefläche für eine Werkstückkante bildet, wenn ein Schnitt ausgeführt werden soll, der parallel zu einer Kante des Werkstücks verlaufen soll.

Oberhalb des Hauptsägeblatts 1010 ist eine Schutzhaube 1060 angeordnet, die das Sägeblatt einerseits abdeckt, um Verletzungen zu verhindern, andererseits eine Spanabsaugung bewirkt. Die Schutzhaube 1060 ist mehrfach verschwenkbar an einer hinteren Tischsäule 1002 befestigt. An der Tischsäule 1002 ist weiterhin an einem Auslegerarm eine Benutzerschnittstelle 1070 angeordnet, welche Maschinenparameter anzeigt und Eingabefelder bereitstellt, mit denen Maschinenparameter vorprogrammiert und gesteuert werden können.

In Flucht mit dem Hauptsägeblatt 1010 und folglich ebenso parallel und fluchtend zu der Schnittline 1010a ist ein Vorritzsägeblatt 1015 angeordnet, das geringfügig aus einem Schlitz, der in dem Werkstückauflagetisch 1020 ausgebildet ist, herausragt. Das Vorritzsägeblatt 1015 ist in der Ansicht gemäß Fig. 1 rechts von dem Hauptsägeblatt 1010 angeordnet. Es liegt in Bezug auf die Bewegung des Rollwagens 1030 während des Schnitts vor dem Hauptsägeblatt 1010. Ein Schnitt wird bei der Formatkreissäge folglich solcherart durchgeführt, dass der Rollwagen 1030 aus der in Fig. 1 gezeigten Position nach rechts in Bezug auf das Maschinengrundgestell 1001 linear verfahren wird, ein Werkstück darauf aufgelegt wird und dann der Schnitt durchgeführt wird, indem der Rollwagen 1030 mitsamt dem darauf aufliegenden Werkstück nach links verfahren wird. Hierdurch kommt das Werkstück zunächst mit dem Vorritzsägeblatt 1015 in Kontakt, das eine Nut in die untere Fläche des Werkstücks einfräst, hiernach schneidet das Hauptsägeblatt 1010 das Werkstück durch, wobei der Schnitt fluchtend zu der zuvor gesetzten Nut liegt. Das Einbringen der Vorritznut und der Schnitt durch das Hauptsägeblatt erfolgt dabei praktisch zeitgleich, ortsaufgelöst am Werkstück wird jedoch stets zuerst die Vorritznut eingebracht, danach der Sägeschnitt durchgeführt.

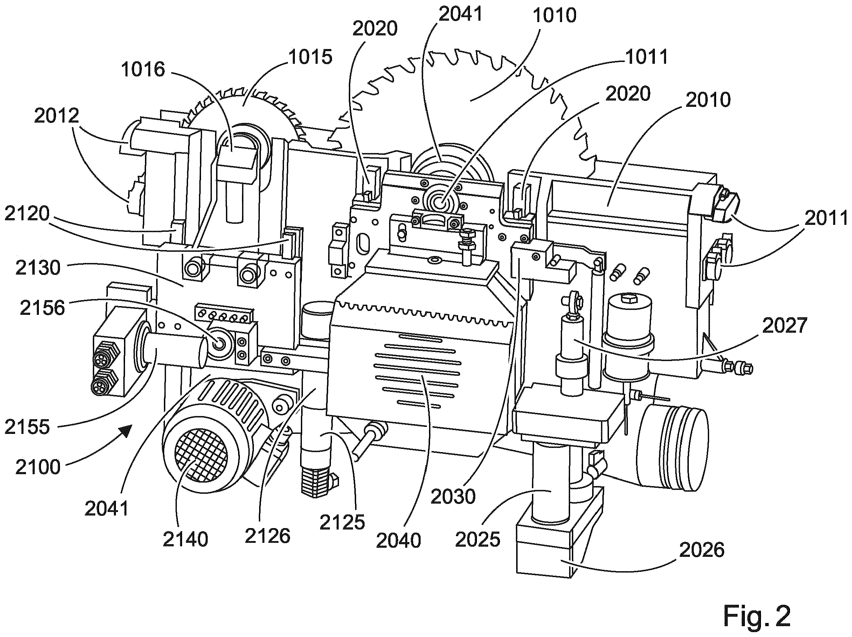

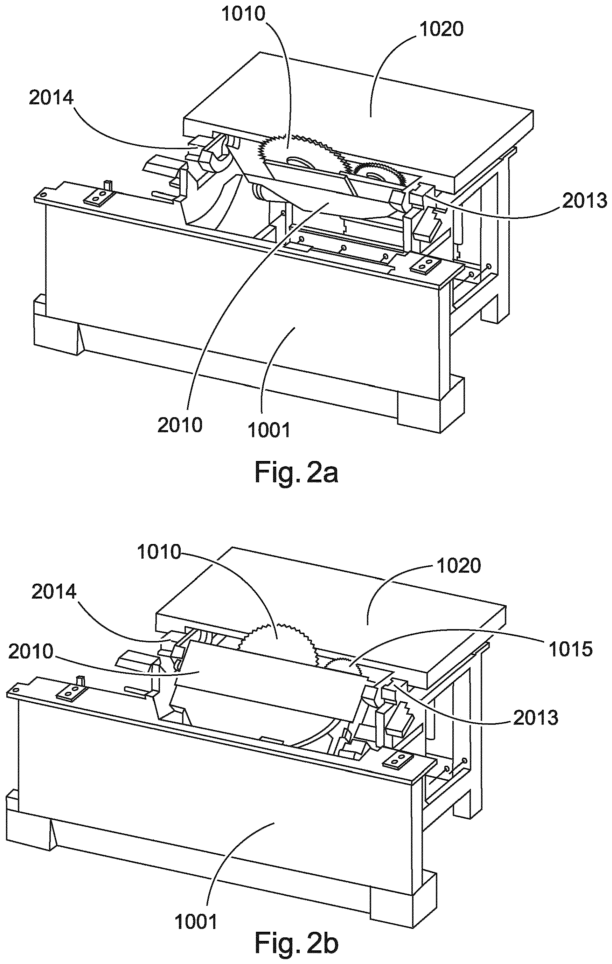

Fig. 2 zeigt eine Ansicht eines Sägeaggregats in einer ersten Ausführungsform im ausgebauten Zustand. Das Sägeaggregat umfasst einen Grundträger 2010, der im Maschinengrundgestell 1001 schwenkbar gelagert ist. Die Schwenkbewegung des Grundgestells 2010 erfolgt hierbei durch Aufnahme des Grundgestells 2010 an zwei Auflagerhalterungen 2011, 2012, die mit einer entsprechenden Schwenklagerung 2013, 2014, ersichtlich aus Figuren 2a und b, zusammenwirken. Die durch die Schwenklagerungen 2103, 2014 definierte Schwenkachse liegt oberhalb der oberen Kante des Grundgestells 2010 und liegt in vertikaler Richtung fluchtend mit der Oberfläche des Werkstückauflagetischs 1020 oder knapp darunter. Dies ermöglicht es, den Schlitz, durch den das Hauptsägeblatt 1010 und das Vorritzsägeblatt 1015 nach oben aus dem Werkstückauflagetisch 1020 herausragt trotz der Verschwenkbarkeit, schmal auszuführen.

Das gesamte, in Fig. 2 abgebildete Sägeaggregat ist um die Schwenklagerungen 2013, 2014 schwenkbar gelagert, sodass alle in Fig. 2 abgebildeten Komponenten gemeinsam verschwenkt werden.

Das Hauptsägeblatt 1010 ist an dem Grundgestell 2010 vertikal verschieblich gelagert. Diese vertikale Verschiebbarkeit wird durch eine Linearführung 2020 geführt und durch einen Schrittmotor 2025 betätigt. Der Schrittmotor 2025 ist über ein Getriebe 2026 und eine daran angesetzte Spindelanordnung 2027 für eine Linearverstellung mit einem Lagergestell 2030 verbunden. Das Lagergestell 2030 nimmt die Sägeblattwelle 1011 des Hauptsägeblatts 1010 auf. An dem Lagergestell 2030 ist weiterhin ein Antriebsmotor 2040 befestigt, der über einen Antriebsriemen 2041 das Hauptsägeblatt antreibt und sich bei einer Höhenverstellung des Lagergestells 2030 mit diesem mitbewegt.

Links von dem Lagergestell 2030 ist ein Vorritzsägeaggregat 2100 an dem Grundgestellt 2010 angeordnet. Das Vorritzsägeaggregat umfasst das Vorritzsägeblatt 1015, das über einen Riementrieb 2041 mit einem Antriebsmotor 2040 gekoppelt ist und durch diesen für eine Rotationsbewegung um eine Vorritzsägeblattwelle 1016 angetrieben wird. Die Vorritzsägeblattwelle 1016 rotiert um eine Achse, die parallel zu der Achse der Hauptsägeblattwelle 1011 ausgerichtet ist.

Der als Vorritzantrieb 2140 dienende Elektromotor und die Vorritzsägeblattwelle 1016 mit dem daran befestigten Vorritzsägeblatt 1015 sind an einem Vorritzergrundgestell 2130 befestigt, wobei zu verstehen ist, dass zum Zwecke der Einstellung einer Vorspannung des Antriebsriemens 2041 eine leichte relative Beweglichkeit zwischen der Abtriebsscheibe für den Antriebsriemen am Antriebsmotor 2140 und der Antriebsscheibe für den Antriebsriemen an der Vorritzsägeblattwelle 1016 gegeben ist, um die Riemenspannung einzustellen.

Das Vorritzergrundgestell 2130 ist mittels zweier Linearführungen 2120 in vertikaler Richtung verschieblich an dem Grundgestell 2010 geführt und kann mittels eines Schrittmotors 2125, der über ein Getriebe 2126 mit Spindel eine lineare Bewegung entlang der Linearführungen 2120 bewirkt, in der Höhe verstellt werden. Diese Höhenverstellung erfolgt in paralleler Richtung zu der Höhenverstellung, des Hauptsägeblatts und kann aber hiervon unabhängig erfolgen.

An dem Vorritzergrundgestell 2130 ist weiterhin ein Antrieb 2155 für eine Seitenverstellung des Vorritzsägeblatts 1015 angeordnet. Dieser Seitenverstellantrieb 2155 wird mit dem Vorritzergrundgestell 2130 in vertikaler Richtung mitbewegt. Der Seitenverstellantrieb 2155 wirkt über ein Getriebe 2156 auf einen Übertragungsmechanismus, der von dem unterhalb des Vorritzsägeblatts 1015 angeordneten Seitenverstellantrieb 2155 ausgehend eine Stellkraft auf die Vorritzsägeblattwelle 1016 und deren Lagereinheit überträgt, mit der die Vorritzsägeblattwelle 1016 und deren Lagereinheit in Richtung der Rotationsachse des Vorritzsägeblatts 1015 seitenverstellt werden kann. Hierdurch kann das Vorritzsägeblatt 1015 in exakte Fluchtungslage mit dem Hauptsägeblatt 1010 verstellt werden, was insbesondere dann notwendig wird, wenn das Hauptsägeblatt gewechselt wird und sich beispielsweise die Dicke des Hauptsägeblatts ändert oder der Abstand zwischen der Hauptsägeblattebene und der Anlagefläche des Hauptsägeblatts in der Maschine durch Toleranzen des Hauptsägeblatts 1010 selbst, oder durch eine unterschiedliche Dimensionierung sich ändert.

Fig. 2a und Fig. 2b zeigen das Sägeaggregat gemäß Fig. 2 von der gegenüberliegenden Seite im Vergleich zu Fig. 2 und in zwei unterschiedlichen Schwenkstellungen. Fig. 2a zeigt eine Verschwenkung aus der vertikalen Ausrichtung des Hauptsägeblatts 1010 und des Vorritzsägeblatts 1015 entgegen dem Uhrzeigersinn, wenn in Bewegungsrichtung des Werkstücks beim Schnitt auf das Hauptsägeblatt geschaut wird. Fig. 2b zeigt demgegenüber eine Verschwenkung im Uhrzeigersinn. Wie ersichtlich ist, kann das gesamte Sägeaggregat mit dem daran gelagerten Hauptsägeblatt 1010 und Vorritzsägeblatt 1015 sowohl entgegen dem Uhrzeigersinn als auch im Uhrzeigersinn um jeweils 46° verschwenkt werden, sodass sich ein gesamter Verschwenkbereich von 92° ergibt. Das Sägeaggregat und dessen verschwenkbare Lagerung nahe dem Maschinengrundgestell erlaubt daher eine sogenannte beidseitige Schwenkung zur Durchführung von Gehrungsschnitten mit positivem und mit negativem Gehrungswinkel.

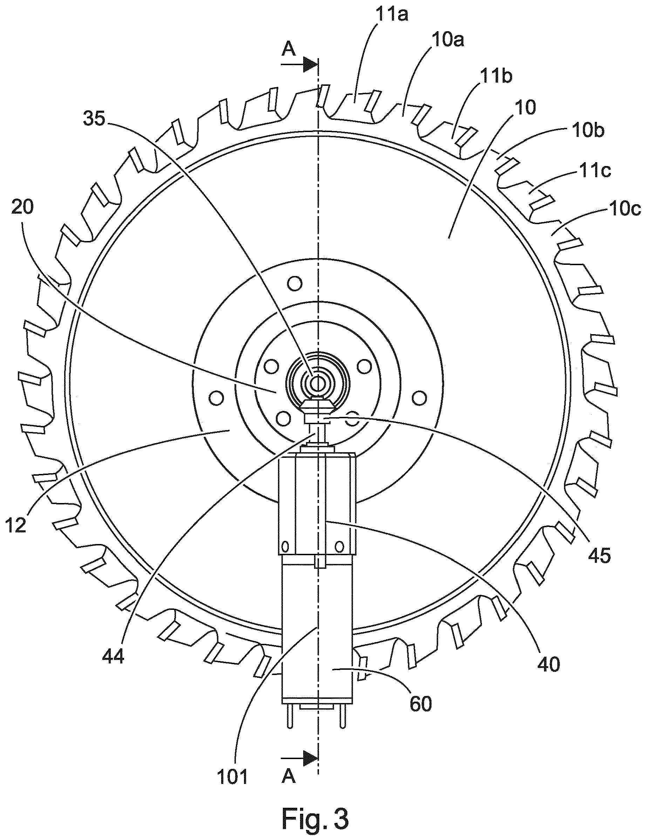

Fig. 3 zeigt ein Vorritzsägewerkzeug, welches aus einem vorderen Vorritzsägeblatt 10 und einem hinteren Vorritzsägeblatt 11 zusammengesetzt ist. Beide Vorritzsägeblatter 10, 11 weisen entlang ihres Umfangs Schneidezähne 10a, b, c, 11a, b, c auf, die solcherart angeordnet sind, dass die Schneidezähne des einen Sägeblatts auf Lücke zu den Schneidezähnen des anderen Sägeblatts in Umfangsrichtung versetzt stehen. Die gezeigte Position der Vorritzsägeblatter 10,11 ist durch eine formschlüssige Arretierung dieser beiden Vorritzsägeblatter zueinander fixiert.

Das vordere Vorritzsägeblatt 10 ist an einem vorderen Sägeblattflansch 12 befestigt. Der vordere Sägeblattflansch 12 ist drehmomentfest mit einer Riemenscheibe 14 verbunden, die einen Keilrippenriemen aufnimmt. Über die Riemenscheibe 14 wird die Antriebskraft von einem beabstandeten Antriebsmotor mittels eines Keilrippenriemens übertragen und die beiden Vorritzsägeblatter 10, 11 in Rotation versetzt. Das hintere Vorritzsägeblatt 11 ist an einem hinteren Sägeblattflansch 13 befestigt und ebenfalls drehmomentfest mit der Riemenscheibe 14 gekoppelt, indem sich ein mit der Riemenscheibe 14 integraler Rohrabschnitt 14a bis zu dem hinteren Sägeblattflansch 13 erstreckt. Die beiden Sägeblattflansche 12, 13 und die Riemenscheibe 14, mit dem daran integral angesetztem Rohrabschnitt 14a bilden eine Hohlwellenkonstruktion mit einem darin angeordnetem Hohlraum.

In diesem Hohlraum ist ein vorderes, feststehendes Hohlachselement 20 angeordnet, auf dem die Hohlwellenanordnung 12, 13, 14, 14a mittels eines vorderen Hauptlagers 21 und eines mittleren Hilfslagers 22 drehbar gelagert ist. Weiterhin ist der hintere Sägeblattflansch 13 mittels eines zweiten Hauptlagers 23 auf einem zweiten Hohlachselement 24 drehbar gelagert.

Innerhalb der Hohlachse ist eine Stellwelle 30 angeordnet und mittels eines Stellwellenlagers 31 drehbar gelagert. Die Stellwelle 30 trägt an ihrem vorderen, aus der Hohlachse 20 herausragenden Ende, ein Kegelrad 35, welches mit einem Ritzel 45 in Eingriff steht. Das Kegelrad 35 ist koaxial um eine Rotationsachse mittels des Stellwellenlagers 31 drehbar gelagert, die der Vorritzerdrehachse 100 entspricht. Das Antriebsritzel 45 ist auf einer Getriebeabtriebswelle 44 eines Planetenradgetriebes 40 montiert. Die Getriebeabtriebswelle ist rotierbar um eine Ritzbreitenaktuatorachse 101, die vertikal ausgerichtet ist und senkrecht zu der Vorritzerdrehachse 100 steht. Am Planetenradgetriebe 40 angeflanscht ist ein als Schrittmotor ausgeführter Ritzbreitenaktuator 60, dessen Antriebswelle koaxial mit einer Getriebeeingangswelle des Planetenradgetriebes 40 verläuft und ebenfalls um die Ritzbreitenaktuatorachse 101 drehbar ist.

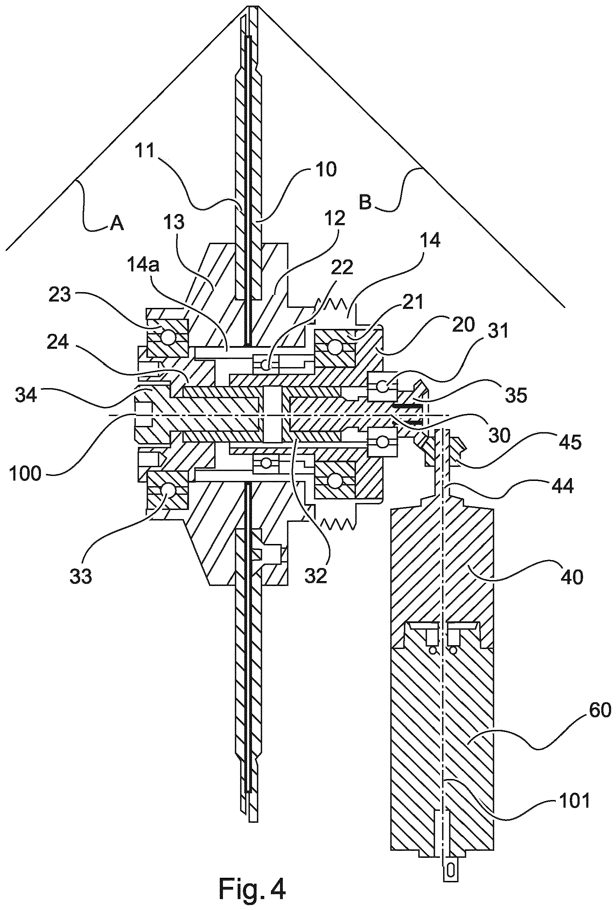

Die in Fig. 4 gezeigte Konstruktion aus Vorritzsägewerkzeug, dessen Halterung und Lagerung und Ritzbreitenverstelleinrichtung kann über eine an der Hohlachse ausgebildete Umfangsfläche an einem Sägeaggregat befestigt werden.

Wird die Stellwelle 30 durch den Ritzbreitenaktuator 60 über das Planetenradgetriebe 40 verdreht, so wird diese Drehbewegung der Stellwelle 30 über ein Gewinde auf ein zylindrisches Stellelement 32 übertragen. Das zylindrische Stellelement 32 wird hierdurch axial gegenüber der axial feststehenden Stellwelle 30 verschoben. Das Stellelement 32 ist mittels einer Schraube 34 an der hinteren Hohlachse 24 befestigt. Über diese Befestigung und die hintere Hohlachse 24 wird die axiale Bewegung des Stellelements 32 über das axial festgesetzte hintere Hauptlager 23 auf den Sägeblattflansch 13 übertragen. Hierdurch wird das hintere Sägeblatt 11 relativ zum vorderen Sägeblatt 10 axial verschoben und folglich kann der axiale Abstand zwischen den beiden Ritzsägeblättern 10, 11 mittels Drehbewegung der Stellwelle 30 verändert werden und folglich die Ritzbreite eingestellt werden.

Der Ritzbreitenaktuator ist innerhalb eines Raums angeordnet, der durch zwei im 45°-Winkel von der oberen Spitze der Ritzsägeblätter verlaufenden Ebenen A, B begrenzt wird.

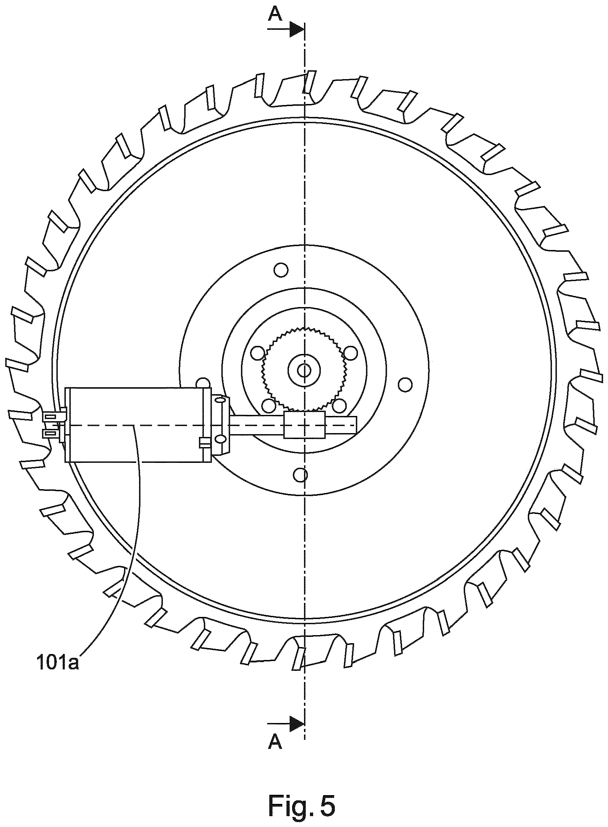

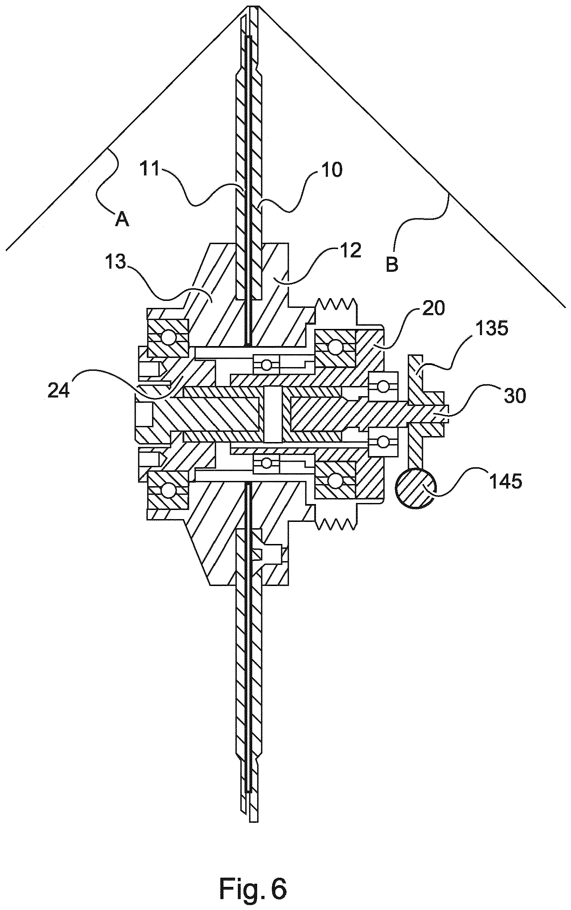

Figuren 5 und 6 zeigen eine zweite Ausführungsform einer Ritzbreitenverstellung. Das gezeigte Ausführungsbeispiel ist hinsichtlich der beiden Vorritzsägeblätter 10, 11, der Sägeblattflansche 12, 13 und deren Lagerung auf den Hohlachsen 20, 24 sowie der darin angeordneten Stellwelle 30 mit Stellelement identisch zu der zuvor beschriebenen Ausführungsform gemäß Figuren 3 und 4. Abweichend ist bei dieser zweiten Ausführungsform jedoch auf der Stellwelle 30 nicht ein Kegelrad, sondern ein Schneckenrad 135 drehmomentfest befestigt. Das Schneckenrad 135 bildet mit einer Schnecke 145 ein Schneckengetriebe, das selbsthemmend ist und dadurch eine unbeabsichtigte Ritzbreitenverstellung durch Krafteinwirkung auf die Sägeblätter hemmt. Die Schnecke 145 ist auf einer Schneckenwelle befestigt, die als Antriebswelle eines Schrittmotors ausgebildet ist und sich um eine Ritzbreitenaktuatorachse 101a dreht. Die Ritzbreitenaktuatorachse 101a liegt ebenfalls senkrecht zu der Vorritzerdrehachse 100, ist aber im Gegensatz zu der Antriebsaktuatorachse 101 der ersten Ausführungsform horizontal ausgerichtet und in einem Abstand unterhalb der Vorritzerdrehachse 100 platziert. Durch das Schneckengetriebe 145, 135 wird die Drehung des Schrittmotors stark untersetzt, wodurch bei dieser Ausführungsform auf ein zwischengeschaltetes Planetenradgetriebe verzichtet werden kann. Auch bei der zweiten Ausführungsform ist der Ritzbreitenaktuator innerhalb eines Raumes angeordnet, der durch zwei im 45°-Winkel von der oberen Spitze der Ritzsägeblätter verlaufenden Ebene A, B begrenzt wird.

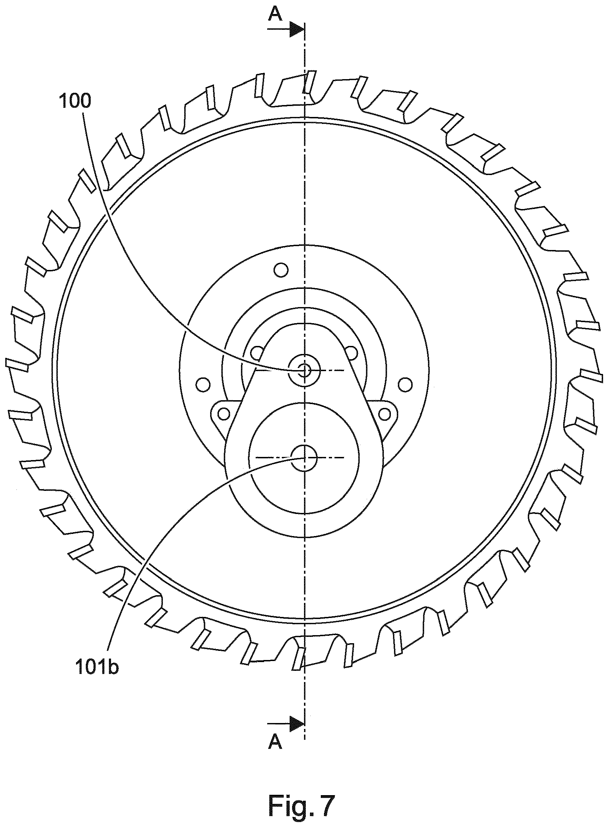

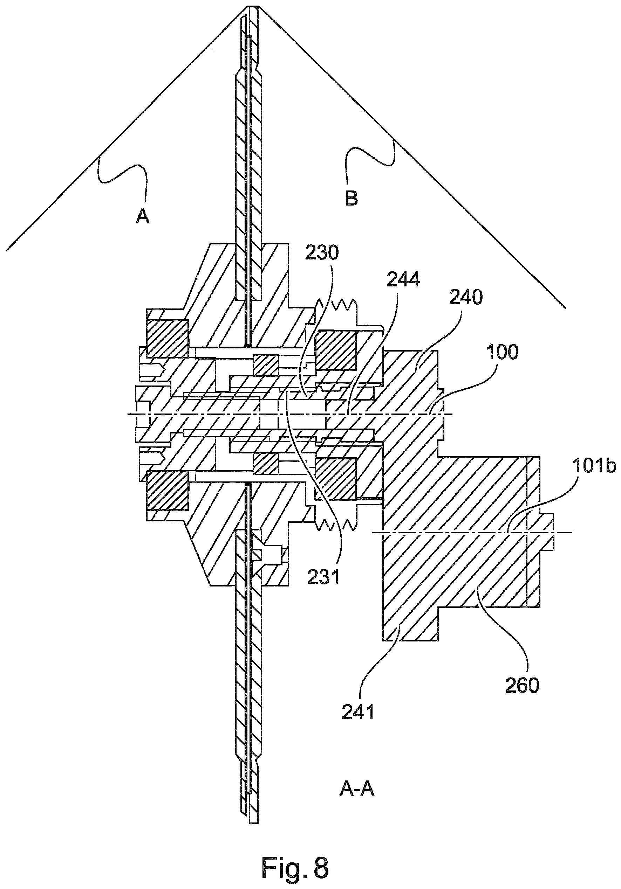

Die Figuren 7 und 8 zeigen eine dritte Ausführungsform einer Ritzbreitenverstelleinrichtung. Auch bei dieser dritten Ausführungsform sind die Vorritzsägeblätter 10, 11, die Sägeblattflansche 12, 13, die Riemenscheibe 14 und die Hohlachsen 20, 24 identisch zu der ersten Ausführungsform ausgebildet. Innerhalb der Hohlachse 20 ist eine Stellwelle 230 angeordnet, die über ein Stellgewinde eine rotatorische Stellbewegung der Stellwelle 230 in eine axiale Verschiebung eines Stellelements umsetzt und über die Hohlachse 24 auf den hinteren Sägeblattflansch 13 überträgt. Die Stellwelle 230 ist hierbei an ihrem nach vorne weisenden Ende als Hohlwelle ausgeführt und nimmt drehmomentfest eine Getriebeausgangswelle 244 eines Stirnradgetriebes 240 auf. Das Stirnradgetriebe 240 ist an der Hohlachse 20 befestigt und weist ein Getriebegehäuse 241 auf, welches sich ausgehend von der Befestigung an der Hohlachse 20 nach unten erstreckt und erweitert. An dem Getriebegehäuse 241 ist ein Ritzbreitenaktuator 260 befestigt, dessen Antriebsachse mit der Getriebeeingangswelle verbunden ist und eine Untersetzung seiner Drehbewegung durch das Stirnradgetriebe 240 erfährt. Die Antriebsachse 101b des Ritzbreitenaktuators 260 ist parallel zur Vorritzerdrehachse 100 ausgerichtet und nach unten versetzt.

Auch bei der dritten Ausführungsform sind die Verstelleinrichtungen inklusive des Ritzbreitenaktuators 260 in einem Raum angeordnet, der sich ausgehend von der oberen Spitze der Sägeblätter 10, 11 in einem Winkel von je 45° zu beiden Seiten erstreckt.

## Patentansprüche

1. Sägeaggregat für eine Kreissäge, umfassend:
eine an einem Grundgestell (1001) befestigbare Vorritzsägeeinheit (2100) mit
- einem in einer Vorritzlagerungseinheit um eine Vorritzerdrehachse (100) drehbar gelagerten Vorritzsägewerkzeug (1015) mit einem Ritzsägeblattdurchmesser,
- einer Vorritzantriebseinheit (2040) zum Antreiben des Vorritzsägewerkzeugs (1015) in eine Rotationsbewegung um die Vorritzerdrehachse (100),
- eine Schwenkeinrichtung zum Verschwenken des Vorritzsägewerkzeugs (1015) relativ zum Grundgestell (1001) um eine horizontale Schwenkachse, die senkrecht zu der Vorritzerdrehachse (100) liegt,
- eine Ritzbreitenverstelleinrichtung zum Einstellen der Ritzbreite des Vorritzsägewerkzeugs (1015),
- einen Ritzbreitenaktuator (60) zum Antreiben der Ritzbreitenverstelleinrichtung,
**dadurch gekennzeichnet, dass** die Ritzbreitenverstelleinrichtung eine koaxial zur Vorritzerdrehachse (100) angeordnete Stellwelle (30) aufweist, die mit dem Ritzbreitenaktuator (60) gekoppelt und zum Verstellen der Ritzbreite durch den Ritzbreitenaktuator (60) in eine Drehbewegung antreibbar ist.

2. Sägeaggregat nach Anspruch 1,
**dadurch gekennzeichnet, dass** der Ritzbreitenaktuator (60)
- bei einer Schwenkstellung mit horizontal verlaufender Vorritzerdrehachse (100) zumindest teilweise in einem Abstand von einer durch die Vorritzerdrehachse (100) laufenden horizontalen Ebene angeordnet ist, der kleiner als der halbe Ritzsägeblattdurchmesser ist, und
- innerhalb eines Bereichs angeordnet ist, der durch eine erste und eine zweite Ebene begrenzt wird, die sich entlang der Schwenkachse schneiden, wobei die erste Ebene sich von der Schwenkachse in einem Winkel von 45° nach unten erstreckt und die zweite Ebene sich von der Schwenkachse in einem Winkel von -45° nach unten erstreckt.

3. Sägeaggregat nach Anspruch 1,
**dadurch gekennzeichnet, dass** die Stellwelle (30)
- zumindest teilweise in einem Hohlraum einer Vorritzerwelle (1016) aufgenommen ist, an der das Vorritzsägewerkzeug (1015) befestigt ist,
- mittels eines Gewindes so mit einer Stellachse gekoppelt ist, dass die Drehbewegung der Stellwelle (30) in eine translatorische Bewegung der Stellachse umgesetzt wird, und/oder
- die Stellwelle (30) mittels eines vorzugsweise selbsthemmenden Zahnradgetriebes oder eines Zugmittelgetriebes mit dem Ritzbreitenaktuator (60) gekoppelt ist, wobei das Zahnradgetriebe bzw. das Zugmittelgetriebe ein
- ein Kegelradgetriebe (35, 45),
- ein Stirnradgetriebe,
- ein Schneckengetriebe,
- ein Kettengetriebe,
- ein Riemengetriebe, wie ein Zahnriemengetriebe oder ein Keilriemengetriebe
ist.

4. Sägeaggregat nach einem der vorhergehenden Ansprüche,
**dadurch gekennzeichnet, dass** der Ritzbreitenaktuator (60) ein Drehaktuator ist, der eine in einem Antriebsgehäuse drehbar um eine Antriebsaktuatorachse (101) gelagerte Antriebswelle aufweist und vorzugsweise die Antriebsaktuatorachse (101) senkrecht zur Vorritzerdrehachse (100) verläuft.

5. Sägeaggregat nach Anspruch 4,
**dadurch gekennzeichnet, dass** die Antriebsaktuatorachse (101) horizontal oder vertikal verläuft oder in einem Winkel zur Horizontalen steht, der größer als 0° und kleiner als 90° ist.

6. Sägeaggregat nach einem der vorhergehenden Ansprüche,
**dadurch gekennzeichnet, dass** das Vorritzsägewerkzeug (1015) ein erstes Vorritzsägeblatt (10) und ein koaxial zum ersten Vorritzsägeblatt angeordnetes zweites Vorritzsägeblatt (11), das axial relativ zum ersten Vorritzsägeblatt (10) mittels der Ritzbreiteneinstellvorrichtung beweglich ist, umfasst.

7. Sägeaggregat nach dem vorhergehenden Anspruch 6,
**gekennzeichnet durch**
- ein axial von dem Vorritzsägewerkzeug (1015) beabstandetes elastisches Element, welches eine elastische Kraft zwischen einem mit dem ersten Vorritzsägeblatt (10) gekoppeltem Vorspannelement und einem zweiten, mit dem zweiten Vorritzsägeblatt (11) gekoppeltem Vorspanngegenelement erzeugt, oder
- radial bewegliche Gewichtselemente, die in einem sich nach radial auswärts verengenden Ringspalt zwischen einer ersten und einer zweiten Ringfläche angeordnet sind, wobei die erste Ringfläche mit dem ersten Vorritzsägeblatt (10) und die zweite Ringfläche mit dem zweiten Vorritzsägeblatt (11) verbunden ist.

8. Sägeaggregat nach einem der vorhergehenden Ansprüche,
**dadurch gekennzeichnet, dass** die Schwenkeinrichtung ausgebildet ist, um das Vorritzsägewerkzeug (1015) aus einer vertikalen Ausrichtung, in der die Vorritzerdrehachse (100) horizontal verläuft, in eine erste Richtung um die Schwenkachse und aus der vertikalen Ausrichtung in eine der ersten Richtung entgegengesetzten zweite Richtung um die Schwenkachse zu verschwenken.

9. Sägeaggregat nach einem der vorhergehenden Ansprüche,
**gekennzeichnet durch** ein um eine Hauptsägeblattachse drehbar gelagertes Hauptsägeblatt, welches synchron mit dem Vorritzsägewerkzeug (1015) mittels der Schwenkeinrichtung verschwenkbar ist.

10. Sägeaggregat nach einem der vorhergehenden Ansprüche,
**gekennzeichnet durch**
- eine Höhenverstelleinrichtung zum Positionieren des Vorritzsägewerkzeugs (1015) relativ zu dem Grundgestell (1001) in einer vertikalen Richtung quer zu der Vorritzerdrehachse (100), und einen Höhenantriebsaktuator (2125) zum Antreiben der Höhenverstelleinrichtung, oder
- eine Seitenverstelleinrichtung zum Positionieren des Vorritzsägewerkzeugs (1015) relativ zu dem Grundgestell (1001) in einer horizontalen Richtung entlang der Vorritzerdrehachse (100), und einen Seitenantriebsaktuator (2155) zum Antreiben der Seitenverstelleinrichtung.

11. Sägeaggregat nach dem vorhergehenden Anspruch 10,
**dadurch gekennzeichnet, dass** der Höhenantriebsaktuator (2125) und/oder der Seitenantriebsaktuator (2155)
- bei einer Schwenkstellung mit horizontal verlaufender Vorritzerdrehachse (100) zumindest teilweise in einem Abstand von einer durch die Vorritzerdrehachse (100) laufenden horizontalen Ebene angeordnet ist, der kleiner als der halbe Ritzsägeblattdurchmesser ist, und
- innerhalb eines Bereichs angeordnet ist, der durch eine erste und eine zweite Ebene begrenzt wird, die sich entlang der Schwenkachse schneiden, wobei die erste Ebene sich von der Schwenkachse in einem Winkel von 45° nach unten erstreckt und die zweite Ebene sich von der Schwenkachse in einem Winkel von -45° nach unten erstreckt.

12. Kreissägemaschine mit
- einem Grundgestell (1001),
- einem an dem Grundgestell (1001) befestigten Werkstückauflagetisch (1020) und
- einem Sägeaggregat nach einem der vorhergehenden Ansprüche,
wobei das Sägeaggregat
- entlang eines Sägeschlitzes in dem Werkstückauflagetisch (1020) zur Durchführung eines Sägeschnittes längsverfahrbar ist, oder
- am Grundgestell (1001) befestigt ist, und während eines Sägeschnitts ortsfest durch eine Sägeblattöffnung vorsteht.

## Claims

1. Saw unit for a circular saw, comprising:
a scoring saw unit (2100) which can be secured to a base frame (1001), having
- a scoring saw (1015) with a scoring saw blade diameter, mounted in a scoring mounting unit so as to be rotatable about a scorer rotation axis (100),
- a scoring drive unit (2040) for driving the scoring saw (1015) in a rotating motion about the scorer rotation axis (100),
- a pivot mechanism for pivoting the scoring saw (1015) relative to the base frame (1001) about a horizontal pivot axis lying perpendicular to the scorer rotation axis (100),
- a scoring width adjusting device for adjusting the scoring width of the scoring saw (1015),
- a scoring width actuator (60) for driving the scoring width adjusting device,
**characterised in that** the scoring width adjusting device has an actuating shaft (30) disposed coaxially with the scorer rotation axis (100) which is coupled with the scoring width actuator (60) and can be driven in a rotating motion by the scoring width actuator (60) in order to adjust the scoring width.

2. Saw unit as claimed in claim 1,
**characterised in that** the scoring width actuator (60)
- is disposed at least partially at a distance from a horizontal plane extending through the scorer rotation axis (100) that is smaller than half the scoring saw blade diameter when in a pivoted position with a horizontally extending scorer rotation axis (100), and
- is disposed within an area that is bounded by a first and a second plane which intersect along the pivot axis, the first plane extending down from the pivot axis at an angle of 45° and the second plane extending down from the pivot axis at an angle of -45°.

3. Saw unit as claimed in claim 1,
**characterised in that** the actuating shaft (30)
- is at least partially accommodated in a cavity of a scorer shaft (1016) to which the scoring saw (1015) is attached,
- is coupled with an adjusting shaft by means of a thread so that the rotating motion of the actuating shaft (30) is converted into a translating motion of the adjusting shaft, and/or
- the actuating shaft (30) is coupled with the scoring width actuator (60) by means of a preferably self-locking gear drive or a traction drive, the gear drive or traction drive being
- a bevel gear (35, 45),
- a spur gear,
- a worm gear,
- a chain gear,
- a belt drive, such as a toothed-belt drive or a V-belt drive.

4. Saw unit as claimed in one of the preceding claims,
**characterised in that** the scoring width actuator (60) is a rotary actuator having a drive shaft mounted in a drive housing so as to be rotatable about a drive actuator axis (101) and the drive actuator axis (101) preferably extends perpendicular to the scorer rotation axis (100).

5. Saw unit as claimed in claim 4,
**characterised in that** the drive actuator axis (101) extends horizontally or vertically or sits at an angle to the horizontal that is greater than 0° and less than 90°.

6. Saw unit as claimed in one of the preceding claims,
**characterised in that** the scoring saw (1015) comprises a first scoring saw blade (10) and a second scoring saw blade (11) disposed coaxially with the first scoring saw blade which can be moved axially relative to the first scoring saw blade (10) by means of the scoring width adjusting device.

7. Saw unit as claimed in preceding claim 6,
**characterised by**
- an elastic element spaced axially apart from the scoring saw (1015) which generates an elastic force between a biasing element coupled with the first scoring saw blade (10) and a second biasing counter-element coupled with the second scoring saw blade (11), or
- radially movable weight elements which are disposed in an annular gap between a first and a second annular surface tapering in the radially outward direction, the first annular surface being connected to the first scoring saw blade (10) and the second annular surface being connected to the second scoring saw blade (11) .

8. Saw unit as claimed in one of the preceding claims,
**characterised in that** the pivot mechanism is designed to pivot the scoring saw (1015) from a vertical orientation, in which the scorer rotation axis (100) extends horizontally, in a first direction about the pivot axis and from the vertical orientation in a second direction opposite the first direction about the pivot axis.

9. Saw unit as claimed in one of the preceding claims,
**characterised by** a main saw blade mounted so as to be rotatable about a main saw blade axis which can be pivoted synchronously with the scoring saw (1015) by means of the pivot mechanism.

10. Saw unit as claimed in one of the preceding claims,
**characterised by**
- a height-adjusting mechanism for positioning the scoring saw (1015) relative to the base frame (1001) in a vertical direction transversely to the scorer rotation axis (100) and a height drive actuator (2125) for driving the height-adjusting mechanism, or
- a lateral adjusting mechanism for positioning the scoring saw (1015) relative to the base frame (1001) in a horizontal direction along the scorer rotation axis (100) and a lateral drive actuator (2155) for driving the lateral adjusting mechanism.

11. Saw unit as claimed in preceding claim 10,
**characterised in that** the height drive actuator (2125) and/or the lateral drive actuator (2155)
- is disposed at least partially at a distance from a horizontal plane extending through the scorer rotation axis (100) that is smaller than half the scoring saw blade diameter when in a pivoted position with a horizontally extending scorer rotation axis (100), and
- is disposed within an area that is bounded by a first and a second plane which intersect along the pivot axis, the first plane extending down from the pivot axis at an angle of 45° and the second plane extending down from the pivot axis at an angle of -45°.

12. Circular sawing machine having
- a base frame (1001),
- a workpiece support table (1020) secured to the base frame (1001) and
- a saw unit as claimed in one of the preceding claims,
wherein the saw unit
- is displaceable lengthways along a saw slot in the workpiece support table (1020) for making a saw cut, or
- is secured to the base frame (1001) and is stationary extending through a saw blade opening during a saw cut.

## Revendications

1. Groupe de sciage pour une scie circulaire, comprenant :
une unité de sciage d'incision (2100) pouvant être fixée au niveau d'un châssis de base (1001) avec
- un outil de sciage d'incision (1015) monté de manière à pouvoir tourner autour d'un axe de rotation d'inciseur (100) dans une unité de support d'incision, avec un diamètre de lame de scie à entailler,
- une unité d'entraînement d'incision (2040) servant à entraîner l'outil de sciage d'incision (1015) dans un déplacement de rotation autour de l'axe de rotation d'inciseur (100),
- un système de pivotement servant à faire pivoter l'outil de sciage d'incision (1015) par rapport au châssis de base (1001) autour d'un axe de pivotement horizontal, qui se situe de manière perpendiculaire par rapport à l'axe de rotation d'inciseur (100),
- un système d'ajustement de largeur d'entaille servant à régler la largeur d'entaille de l'outil de sciage d'incision (1015),
- un actionneur de largeur d'entaille (60) servant à entraîner le système d'ajustement de largeur d'entaille,
**caractérisé en ce que** le système d'ajustement de largeur d'entaille présente un arbre de réglage (30) disposé de manière coaxiale par rapport à l'axe de rotation d'inciseur (100), qui est couplé à l'actionneur de largeur d'entaille (60) et peut être entraîné dans un mouvement de rotation par l'actionneur de largeur d'entaille (60) pour ajuster la largeur d'entaille.

2. Groupe de sciage selon la revendication 1,
**caractérisé en ce que** l'actionneur de largeur d'entaille (60),
- est disposé dans une position de pivotement avec un axe de rotation d'inciseur (100) s'étendant horizontalement au moins en partie à une distance d'un plan horizontal s'étendant à travers l'axe de rotation d'inciseur (100), qui est inférieure à la moitié du diamètre de lame de scie à entailler, et
- est disposé à l'intérieur d'une zone, qui est délimitée par un premier et un second plan, qui se coupent le long de l'axe de pivotement, dans lequel le premier plan s'étend depuis l'axe de pivotement selon un angle de 45° vers le bas et le second plan s'étend depuis l'axe de pivotement selon un angle de -45° vers le bas.

3. Groupe de sciage selon la revendication 1,
**caractérisé en ce que** l'arbre de réglage (30)
- est logé au moins en partie dans une cavité d'un arbre d'inciseur (1016), au niveau duquel l'outil de sciage d'incision (1015) est fixé,
- est couplé au moyen d'un filetage à un axe de réglage de telle sorte que le mouvement de rotation de l'arbre de réglage (30) est transformé en un mouvement de translation de l'axe de réglage, et/ou
- l'arbre de réglage (30) est couplé au moyen d'un engrenage de préférence autobloquant ou d'un engrenage à mécanisme de traction à l'actionneur de largeur d'entaille (60), dans lequel l'engrenage ou l'engrenage à mécanisme de traction est
- un engrenage conique (34, 45),
- un engrenage droit,
- un engrenage à vis sans fin,
- un engrenage à chaîne,
- un engrenage à courroie, tel qu'un engrenage à courroie dentée ou un engrenage à courroie trapézoïdale.

4. Groupe de sciage selon l'une quelconque des revendications précédentes,
**caractérisé en ce que** l'actionneur de largeur d'entaille (60) est un actionneur rotatif, qui présente un arbre d'entraînement monté de manière à pouvoir tourner autour d'un axe d'actionneur d'entraînement (101) dans un boîtier d'entraînement et de préférence l'axe d'actionneur d'entraînement (101) s'étend perpendiculairement à l'axe de rotation d'inciseur (100).

5. Groupe de sciage selon la revendication 4,
**caractérisé en ce que** l'axe d'actionneur d'entraînement (101) s'étend horizontalement ou verticalement ou se situe selon un angle par rapport à l'horizontale, qui est supérieur à 0° et inférieur à 90°.

6. Groupe de sciage selon l'une quelconque des revendications précédentes,
**caractérisé en ce que** l'outil de sciage d'incision (1015) comprend une première lame de scie à entailler (10) et une seconde lame de scie à entailler (11) disposée de manière coaxiale par rapport à la première lame de scie à entailler, qui est mobile axialement par rapport à la première lame de scie à entailler (10) au moyen du dispositif de réglage de largeur d'entaille.

7. Groupe de sciage selon la revendication précédente 6,
**caractérisé par**
- un élément élastique, espacé axialement de l'outil de sciage d'incision (1015), lequel génère une force élastique entre un élément de précontrainte couplé à la première lame de scie à entailler (10) et un second contre-élément de précontrainte couplé à la seconde lame de scie à entailler (11),
ou
- des éléments de poids radialement mobiles, qui sont disposés dans une fente annulaire se rétrécissant radialement vers l'extérieur entre une première et une seconde surface annulaire, dans lequel la première surface annulaire est reliée à la première lame de scie à entailler (10) et la seconde surface annulaire est reliée à la seconde lame de scie à entailler (11).

8. Groupe de sciage selon l'une quelconque des revendications précédentes,
**caractérisé en ce que** le système de pivotement est réalisé pour faire pivoter l'outil de sciage d'incision (1015) depuis une orientation verticale, dans laquelle l'axe de rotation d'inciseur (100) s'étend horizontalement, dans une première direction autour de l'axe de pivotement et depuis l'orientation verticale dans une seconde direction opposée à la première direction autour de l'axe de pivotement.

9. Groupe de sciage selon l'une quelconque des revendications précédentes,
**caractérisé par** une lame de scie principale, montée de manière à pouvoir tourner autour d'un axe de lame de scie principale, laquelle peut pivoter de manière synchrone avec l'outil de sciage d'incision (1015) au moyen du système de pivotement.

10. Groupe de sciage selon l'une quelconque des revendications précédentes,
**caractérisé par**
- un système d'ajustement de hauteur servant à positionner l'outil de sciage d'incision (1015) par rapport au châssis de base (1001) dans une direction verticale transversalement par rapport à l'axe de rotation d'inciseur (100), et un actionneur d'entraînement en hauteur (2125) servant à entraîner le système d'ajustement de hauteur, ou
- un système d'ajustement latéral servant à positionner l'outil de sciage d'incision (1015) par rapport au châssis de base (1001) dans une direction horizontale le long de l'axe de rotation d'inciseur (100), et un actionneur d'entraînement latéral (2155) servant à entraîner le système d'ajustement latéral.

11. Groupe de sciage selon la revendication précédente 10,
**caractérisé en ce que** l'actionneur d'entraînement de hauteur (2125) et/ou l'actionneur d'entraînement latéral (2155)
- sont disposés dans une position de pivotement avec l'axe de rotation d'inciseur (100) s'étendant horizontalement au moins en partie à une distance d'un plan horizontal s'étendant à travers l'axe de rotation d'inciseur (100), qui est inférieure à la moitié du diamètre de lame de scie à entailler, et
- sont disposés à l'intérieur d'une zone, qui est délimitée par un premier et un second plan, qui se coupent le long de l'axe de pivotement, dans lequel le premier plan s'étend depuis l'axe de pivotement selon un angle de 45° vers le bas et le second plan s'étend depuis l'axe de pivotement selon un angle de -45° vers le bas.

12. Scie circulaire avec
- un châssis de base (1001),
- un plateau de réception de pièces (1020) fixé au niveau du châssis de base (1001), et
- un groupe de sciage selon l'une quelconque des revendications précédentes,
dans laquelle le groupe de sciage
- peut être déplacé en longueur le long d'une entaille de sciage dans le plateau de réception de pièces (1020) pour effectuer une découpe par sciage, ou
- est fixé au niveau du châssis de base (1001), et dépasse par une ouverture de lame de scie de manière stationnaire pendant une découpe par sciage.
